(19) Europäisches Patentamt / European Patent Office / Office européen des brevets

(11) **EP 1 832 954 A1**

(12) **EUROPÄISCHE PATENTANMELDUNG**

(43) Veröffentlichungstag:
**12.09.2007 Patentblatt 2007/37**

(51) Int Cl.:
*G06F 1/26* (2006.01)          *G06F 1/32* (2006.01)

(21) Anmeldenummer: 06004817.0

(22) Anmeldetag: **09.03.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder:
- **Binner, Stefan**
  **85221 Dachau (DE)**
- **Batato, Leif**
  **80798 München (DE)**
- **Balzer, Mara**
  **80799 München (DE)**

(72) Erfinder:
- **Binner, Stefan**
  **85221 Dachau (DE)**
- **Batato, Leif**
  **80798 München (DE)**
- **Balzer, Mara**
  **80799 München (DE)**

Bemerkungen:
Geänderte Patentansprüche gemäss Regel 86 (2) EPÜ.

(54) **Vorrichtung und Verfahren zur Energieversorgung von tragbaren computergesteuerten Vorrichtungen**

(57) Computergesteuerte Vorrichtung (1), z. B. ein tragbarer, batteriebetriebener Personal Computer (im folgenden mit dem englischen Begriff Notebook oder Laptop Computer beschrieben), mit einem darin enthaltenen, wieder aufladbaren Energiespeicher (1A) (Batterie, Akku) und einer damit elektrisch leitend verbundenen Ladevorrichtung (2), welche den Energiespeicher (1A) speist und über die Leitung (4) mit einer Steuereinheit (3), die an das Stromnetz angeschlossen ist, verbunden ist, **dadurch gekennzeichnet, dass** die Steuereinheit (3) über eine Strom führende Datenverbindung (5) mit der computergesteuerten Vorrichtung (1) verbunden ist und durch Signale der Vorrichtung (1) so steuerbar und beschaltbar ist, dass die Steuereinheit (3) (und die damit verbundene Ladevorrichtung (2)) entweder an das Stromnetz angeschlossen ist oder vollständig davon getrennt ist.

Figur 1: Schematische Übersicht

**EP 1 832 954 A1**

Printed by Jouve, 75001 PARIS (FR)

**Beschreibung**

**1. Beschreibung der Erfindung**

Die Erfindung betrifft das technische Gebiet Elektrotechnik und Informatik, insbesondere die Energieversorgung von tragbaren, computergesteuerten Vorrichtungen, wie beispielsweise Laptop Computern, so genannten Notebooks, Spielekonsolen, und ähnlichen Geräten.

Bei der Erfindung handelt es sich um eine Steuereinheit bzw. ein Verfahren zur Verbindung und Trennung von Netzeilen bei tragbaren, batteriebetriebenen Personal Computern (im Folgenden mit dem englischen Begriff Notebook beschrieben) vom öffentlichen Stromnetz, insbesondere in Abhängigkeit vom Ladezustand der Batterie und des Betriebszustandes des Notebooks unter Verwendung einer USB (Universal Serial Bus) Schnittstelle zur Steuerung und Stromversorgung der Steuereinheit.

*1.1. Stand der Technik*

**1.1.1 Ansteuerung externer Geräte via USB**

**USB allgemein**

USB ist ein serieller Bus. Einzelne Bits des Datenpaketes werden nacheinander übertragen. Die Datenkommunikation erfolgt über eine differentielle Datenleitung. Bei der differentiellen Übertragung besteht jede Leitung aus zwei Drähten. Einer davon überträgt das Datensignal unverändert, der andere das inverse Signal. Der Signalempfänger bildet die Differenzspannung beider Signale; der Spannungshub zwischen 1- und 0-Pegeln ist dadurch doppelt so groß. Dies erhöht die Übertragungssicherheit, unterdrückt Gleichtaktstörungen und verbessert nebenbei die elektromagnetische Verträglichkeit.

Die Bus-Spezifikation sieht einen zentralen Hostcontroller vor, der die Koordination der angeschlossenen Geräte übernimmt. Daran können bis zu 127 verschiedene Geräte angeschlossen werden. USB überträgt seine Daten in Paketen.

Die Bezeichnung "Bus" bezieht sich auf die logische Vernetzung, die tatsächliche elektrische Ausführung erfolgt nur mit Punktzu-Punkt-Verbindungen.

USB-Stecker:

Die Stecker eines USB-Kabels sind verpolungs- und vertauschungssicher gestaltet. In Richtung des Hostcontrollers (Upstream) werden flache Stecker (Typ A) verwendet. Zum angeschlossenen Gerät hin (Downstream) werden die Kabel entweder fix montiert oder über annähernd quadratische Stecker (Typ B) angeschlossen. Im USB-Standard verankert ist lediglich der fünfpolige, entfernt dachähnliche Stecker.

USB-Kabel:

In einem USB-Kabel werden vier Adern benötigt. Zwei Adern übertragen dabei die Daten. Die anderen beiden Adern versorgen das angeschlossene Gerät mit einer (Gleich) Spannung von 5 V. Der USB-Spezifikation entsprechende Geräte dürfen bis zu 500 mA aus dem USB beziehen, Geräte mit einer Leistung von bis zu 2,5 W können also über den Bus mitversorgt werden. Die Länge eines Kabels vom Hub zum Gerät ist auf fünf Meter begrenzt.

Treiber:

Um nicht für jedes Gerät eigene Treiber zu erfordern, definiert der USB-Standard verschiedene Geräteklassen, die sich durch generische Treiber steuern lassen. Auf diese Weise sind HID (=Human Interface Devices) Geräte also USB-Tastaturen, Mäuse, USB-Massenspeicher und andere Geräte mit ihren grundlegenden Funktionen sofort einsatzfähig, ohne dass erst ein Treiber von einer compact disc (CD) installiert werden müsste. Herstellerspezifische Erweiterungen sind möglich. Die Information, zu welchen Geräteklassen sich ein Gerät zählt, kann im Device-Deskriptor oder in einem Interface-Deskriptor untergebracht werden.

EEPROM, Electrically Eraseable Programmable Read Only Memory:

EEPROM (Electrically Erasable Programmable Read-Only Memory, wörtlich: elektrisch löschbarer, programmierbarer Nur-Lese-Speicher) ist ein nichtflüchtiger, elektronischer Speicherbaustein, der unter anderem in der Computertechnik und dort hauptsächlich in Embedded Systems eingesetzt wird. Früher wurde dieser Bausteintyp mittels eines Programmiergerätes mit beliebigen Daten gefüllt, inzwischen kann dies auch von der angeschlossenen CPU im System bewerkstelligt werden.

Im Gegensatz zu einem EPROM kann der Inhalt eines EEPROMs elektrisch gelöscht werden. Bei EPROMs ist zum Löschen eine UV-Lampe nötig, EEPROMs können im Programmiergerät oder im System gelöscht werden. Der Löschvorgang dauert deshalb nur einige Sekunden - verglichen mit 10 bis 30 Minuten beim EPROM. Dabei wird das EEPROM durch einen hohen Spannungspuls, der die Ladung der Sperrschicht in den Ursprungszustand versetzt, gelöscht. Dieser Vorgang löscht sämtliche Speicherzellen zugleich (Bulk-Erase = Blocklöschen). Im Gegensatz zum Flash-Speicher können beim EEPROM aber auch einzelne Bytes gelöscht bzw. einfach überschrieben werden.

Ein EEPROM besteht aus einer Feldeffekt-Transistorenmatrix mit isoliertem Floating Gate, in welcher jeder Transistor ein Bit repräsentiert. Beim Programmiervorgang wird auf dem Gate eine Ladung gespeichert (der Transistor sperrt). Beim Löschen wird diese Ladung wieder entfernt.

Nach dem "Brennvorgang" des EEPROMs werden die geschriebenen Daten durch ein Bitmuster geladener / ungeladener Transistoren repräsentiert. Diese Daten lassen sich nun beliebig oft auslesen. Die Lesespannung liegt dabei unterhalb der Programmierspannung. Meistens wird nur eine begrenzte Anzahl von Schreibzyklen garantiert (je nach Hersteller 1000-100000). Früher war zum Programmieren eine höhere Spannung erforderlich, diese wird inzwischen bausteinintern erzeugt.

EEPROMs können wie Flash-Speicher byteweise beschrieben werden, wobei der Flash-Speicher aber vor dem Schreiben nur blockweise gelöscht werden kann (wobei die Blockgröße variiert). EEPROMs verwendet man bevorzugt, wenn einzelne Datenbytes oft verändert werden müssen (Betriebsstundenzähler).

Human Interface Device (HID):

HID ist eine Geräteklasse des USB-Standards für Computer, welche Geräte beschreibt, die direkt mit dem Benutzer interagieren. Beispiele sind Geräte wie Tastatur, Maus, Joystick, Grafiktabletts und dergleichen.

HID-Gerätetreiber sind in den gängigen Betriebssystemen enthalten. Wird ein HID-Gerät (während des Betriebs) angeschlossen, wird es meist direkt als Gerätetyp Eingabegeräte (HID) erkannt und dann im Gerätemanager des jeweiligen Betriebssystems, z.B. von Microsoft Windows angezeigt.

**1.1.2 Netzteile**

Das Netzteil enthält einen Transformator, der die Wechselstrom-Eingangsspannung auf den oder die erforderlichen Ausgangswerte umsetzt und die galvanische Netztrennung sicherstellt. Aus **Sicherheitsgründen** darf in der Regel keine elektrisch leitende Verbindung zum Stromnetz vorhanden sein. Der Transformator kann direkt mit der Wechselspannung des Netzes (z.B. in Deutschland 220-230 V, 50 Hz) verbunden werden. Wird am Ausgang Gleichspannung benötigt, enthält das Netzteil zusätzlich einen Gleichrichter. In einem stabilisierten Netzteil sorgt eine Regelschaltung (Spannungsstabilisierung) dafür, dass die Ausgangsspannung bei Änderungen der Ausgangslast oder der Eingangsspannung weitgehend konstant bleibt. Ist die Regelschaltung als Linearschaltung ausgelegt, so wird das Produkt aus der Differenz zwischen Eingangsspannung $U_{in}$ und Ausgangsspannung $U_{out}$ und dem Ausgangsstrom $I_{OUT}$ als **Verlustleistung** (= $P_D$) in Form von **Wärme** frei:

$$P_D = (U_{IN} - U_{OUT}) \times I_{OUT}$$

In Schaltnetzteilen ist die Stabilisierung der Ausgangsspannung in der Regel Bestandteil des Schaltungskonzepts.

**Eigenständiges Gerät**

Für mittlere Leistungen (> 10 W, < 200 W), wie bei Notebooks, werden Netzteile als eigenständiges Gerät hergestellt. Das Netzteil wird als abgesetzte Einheit über eine Primärnetz-Leitung gespeist und versorgt über eine abgehende Leitung den angeschlossenen Verbraucher.

**1.1.3 Der "Memory-Effekt"**

Als Memory-Effekt (Memory = engl. Erinnerung) wird der Kapazitätsverlust bezeichnet, der bei sehr häufiger Teilentladung eines Nickel-Cadmium-Akkus mit gesinterten Elektroden auftritt. Der Akku ‚merkt' sich den Energiebedarf und stellt mit der Zeit statt der ursprünglichen, nur noch die bei den bisherigen Entladevorgängen benötigte Energiemenge zur Verfügung. Elektrisch äußert sich der Effekt in einem frühen Spannungsabfall. Dies bedeutet letztlich eine Verringerung der nutzbaren Kapazität des Akkumulators, da Verbraucher eine Mindestspannung benötigen. Sinkt die Zellenspannung unter diesen Mindestbedarf ab, wird die Zelle für die Nutzung unbrauchbar, obwohl sie noch weiterhin Strom liefern kann.

**Wissenschaftliche Untersuchungen zum "Memory-Effekt":**

Der Memory-Effekt wurde zuerst von der NASA in den 60er Jahren beschrieben. Gesinterte NiCd-Akkus in Satelliten wurden unabhängig vom Grad der Entladung in regelmäßigen Abständen aufgeladen. Mit der Zeit passten sich die Akkus an den Laderhythmus an. Ihre Kapazität reichte nur noch bis zum nächsten Ladezyklus, obwohl sie deutlich größer dimensioniert war.

Die Untersuchung kam zu zwei hauptsächlichen Ursachen des Effekts:

1. Kristallbildung

Beim Aufladen eines NiCd-Akkus bilden sich Cadmium-Mikrokristalle. Wird der Akku nur bis zu einem bestimmten gleichbleibenden Grad entladen, begünstigt dies die Bildung größerer Kristalle aus Mikrokristallen in nicht-entladenen Bereichen. Diese reagieren durch ihre reduzierte Oberfläche im Vergleich zu kleineren Kristallen beim Entladen schlechter, was den Spannungseinbruch bewirkt.

2. Umkristallisation

Ältere Ladegeräte ignorieren den Akkufüllstand. Sie laden über einen festgelegten Zeitraum und überladen einen nur teilentladenen Akku. Dadurch kommt es zu Umkristallisation an der Cd-Elektrode, verbunden aufgrund der Stellung innerhalb der elektrochemischen Spannungsreihe mit einer geringeren Ausgangsspannung und dadurch verringerten Kapazität.

Der Memory-Effekt lässt sich durch mehrmaliges vollständiges Entladen/Laden rückgängig machen und der Akku erhält seine Ausgangskapazität weitgehend zurück.

**Untersuchungen zum Memory-Effekt bei modernen Akkus:**

Das Zentrum für Sonnenenergie- und Wasserstoff-Forschung Baden-Württemberg (ZSW) hat handelsübliche NiCd-, NiMH- und Lithium-Ionen-Akkus bezüglich deren Verhalten bei mehrfacher Teilentladung untersucht. Dabei wurde ein Rückgang der Zellenspannung nach mehrfacher Teilentladung (zehn Teilentlade/ Lade-Zyklen und mehr) festgestellt. Die Reduzierung der Zellenspannung konnte durch einmaliges Entladen auf normale Ladeschlussspannung und wieder Aufladen rückgängig gemacht werden. Erstaunlicherweise verhielten sich NiCd- und NiMH-Akkus sehr ähnlich, Li-Ionen-Akkus wiesen diesen Effekt nicht auf. Daraus kann geschlossen werden, dass für diesen Effekt keine der oben genannten Ursachen in Frage kommt, an denen ja immer Cadmium beteiligt ist.

Je nach chemischem Aufbau zersetzen sich Lithium-Ionen-Akkus mehr oder weniger schnell selbst. Die Zersetzungsgeschwindigkeit steigt mit der Ladung und insbesondere mit der Temperatur des Akkus. Hersteller empfehlen eine Lagerung bei 15 °C und einem Ladestand von 40%. Der Ladestand ist deswegen nicht niedriger gewählt, damit die Zeit, bis der es zu einer selbstzerstörerischen Tiefentladung durch Selbstentladung kommt, möglichst lang ist. Aus diesem Grund wird auch empfohlen, einen gelagerten Akku etwa alle 6 Monate auf 40% zu laden.

Die Autoren der Untersuchung kommen zu den folgenden Empfehlungen:

Eine vollständige Entladung vor jeder Ladung ist nicht notwendig.
Gelegentliches Entladen, etwa nach 50 Teilentladezyklen, ist empfehlenswert.

**1.2. Darstellung der zu lösenden technischen Probleme**

Computergesteuerte Vorrichtungen (z.B. Notebook Computer) mit einem darin enthaltenen, wieder aufladbaren Energiespeicher (Batterie Akku) sind heute weit verbreitet. Obwohl diese Geräte für mobile, vom öffentlichen Stromnetz unabhängige Anwendungen gedacht sind, werde Notebooks überwiegend in Büros oder Heimarbeitsplätzen verwendet und sind dabei über längere Zeit am Netz angeschlossen, auch dann, wenn Sie nicht genutzt werden und das System heruntergefahren ist.

Während dieser Zeit ist das Ladegerät stets angeschlossen und versorgt das Notebook mit Strom, auch wenn die Batterie bereits geladen ist. Hierbei entsteht ein unnötiger Energieverbrauch, da Möglichkeiten zur Einsparung von Elektrizität durch die Verwendung der Batterie nicht ausgenutzt werden. Darüber hinaus wird die Batterie stets in einem voll geladen Zustand gehalten, was den so genannten Memory Effekt unterstützt und sich somit nachteilig auf Leistung und Lebensdauer der Batterie auswirkt (vorzeitiger Ausfall des Akkus). Durch einen vorzeitigen Austausch der Batterie erhöhen sich zusätzlich die Betriebskosten.

Wird das Notebook abgeschaltet, bleibt das Netzteil, im Gegensatz zu einem stationären PC, in Betrieb, außer es wird manuell getrennt (Abstecken vom Netz). Dies geschieht in der Regel in Büros und Heimarbeitsplätzen nicht.

Dadurch wird weiter Strom verbraucht, denn das Netzteil erzeugt Wärme und muss die LED Kontrolllampe mit Strom versorgen, obwohl das Notebook komplett ausgeschaltet ist.

Darüber hinaus kann es zu Schäden im Notebook bei Überspannung im Netz (z.B. Blitzschlag) oder auch zu Überhitzung des Netzteils kommen. Im schlimmsten Fall kann es hierbei zum Brandfall kommen und zur Zerstörung von Büros oder Wohnungen führen.

Beim Betrieb der eingangs genannten computergesteuerten Vorrichtungen ist deshalb anzustreben, dass die folgenden technischen Gegebenheiten vorliegen:

1. Das Netzteil soll beim Ausschalten des Geräts physikalisch vom Stromnetz getrennt werden. Somit sind unnötiger Stromverbrauch im abgeschalteten Zustand (Standby-Modus), Überspannungsschäden am Notebook und Überhitzung des Netzteils und die dadurch gegebene Brandgefahr ausgeschlossen.

2. Zur Energieeinsparung im Betrieb soll das Netzteil nach Erreichen eines frei definierbaren Ladezustands (z.B. 99%) physikalisch vom Stromnetz getrennt werden und bei Absinken auf einen ebenso frei definierbaren Ladezustand (z.B. 20%) wieder mit dem Stromnetz verbunden werden.

3. Durch die unter (2) beschriebenen Ladezyklen sollen Memory Effekte bei der Batterie (also vorzeitiger Ausfall des Akkus) minimiert werden.

**1.3. Lösung der technischen Aufgabe**

Diese Aufgabe wird durch die technischen Merkmale des Vorrichtungsanspruchs 1 und des unabhängigen Verfahrensanspruchs 6 gelöst. Bevorzugte Ausführungsformen der beanspruchten Vorrichtung sind in den abhängigen Ansprüchen 2 bis 5 enthalten. Bevorzugte Ausführungsformen des beanspruchten Verfahrens zeigen die abhängigen Ansprüche 7 bis 15.

Die Erfindung besteht aus einer Hardware- und einer Softwarekomponente, die im Zusammenspiel die benötigte Steuerung ermöglichen.

Entsprechend Anspruch 1 ist die Computergesteuerte Vorrichtung (1), z. B. ein tragbarer, batteriebetriebener Personal Computer (im folgenden mit dem englischen Begriff Notebook oder Laptop Computer beschrieben), mit einem darin enthaltenen, wieder aufladbaren Energiespeicher (1A) (Batterie, Akku) und einer damit elektrisch leitend verbundenen Ladevorrichtung (2), welche den Energiespeicher (1A) speist und über die Leitung (4) mit einer Steuereinheit (3), die an das Stromnetz angeschlossen ist, verbunden ist, **dadurch gekennzeichnet,** dass die Steuereinheit (3) über eine Strom führende Datenverbindung (5) mit der computergesteuerten Vorrichtung (1) verbunden ist und durch Signale der Vorrichtung (1) so steuerbar und beschaltbar ist, dass die Steuereinheit (3) (und die damit verbundene Ladevorrichtung (2)) entweder an das Stromnetz angeschlossen ist oder vollständig davon getrennt ist.

Entsprechend Anspruch 6 richtet sich die Erfindung auch auf ein Verfahren zum Betreiben einer computergesteuerten Vorrichtung (1), z. B. eines tragbaren, batteriebetriebenen Personal Computers (im folgenden mit dem englischen Begriff Notebook oder Laptop Computer beschrieben), mit einem darin enthaltenen, wieder aufladbaren Energiespeicher (1A) (Batterie, Akku) und einer daran angeschlossenen Ladevorrichtung (2), welche den Energiespeicher (1A) speist und die über die Leitung (4) mit einer Steuereinheit (3), die an das Stromnetz angeschlossen ist, verbunden ist, mit der Maßgabe, dass die Steuereinheit (3) über eine Strom führende Datenverbindung (5) mit der computergesteuerten Vorrichtung (1) verbunden ist und durch Software gesteuerte Signale von der Vorrichtung (1) so gesteuert und beschaltet wird, dass die Steuereinheit (3) (und die damit verbundene Ladevorrichtung (2)) entweder an das Stromnetz angeschlossen ist bzw. davon vollständig getrennt ist.

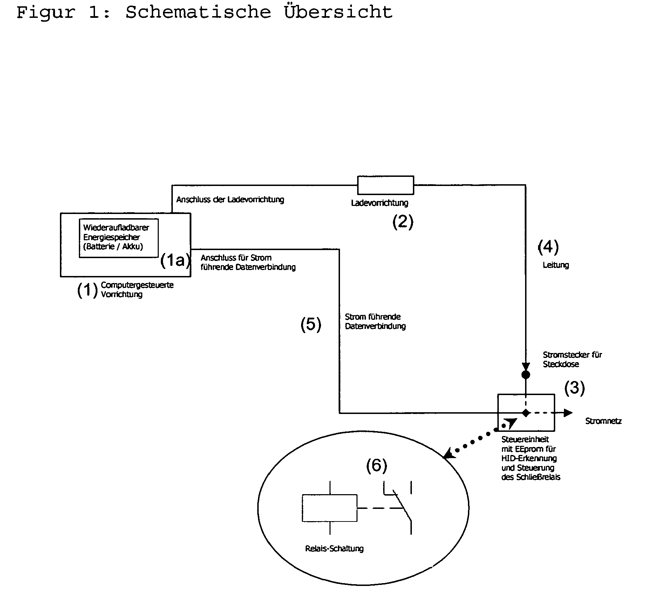

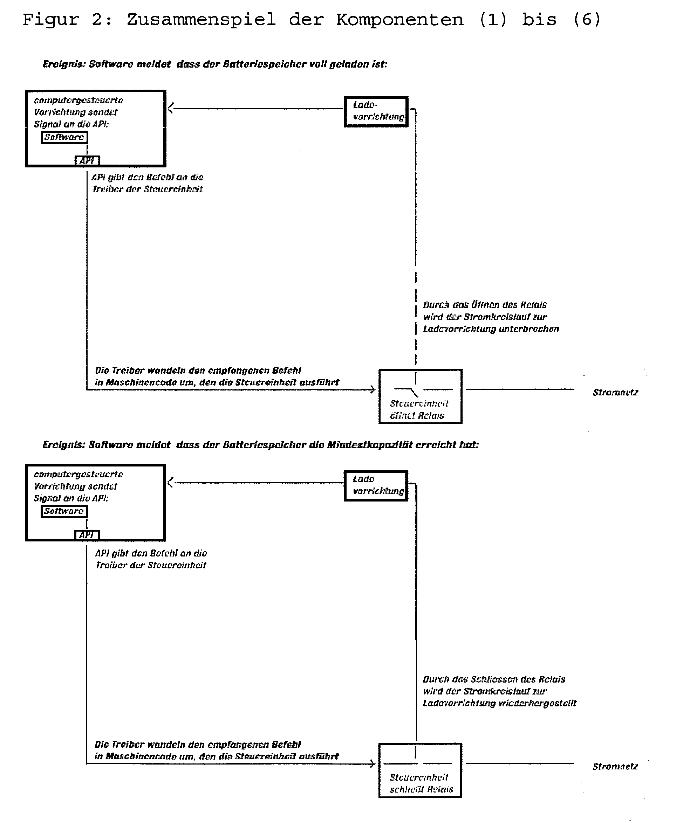

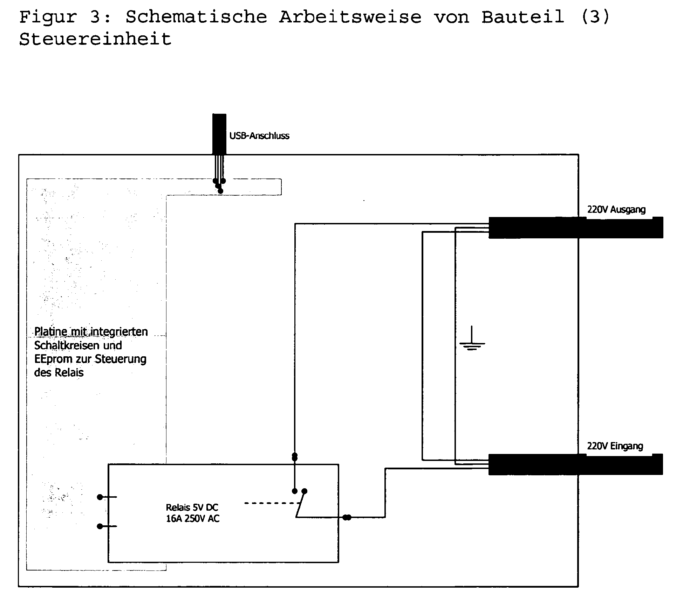

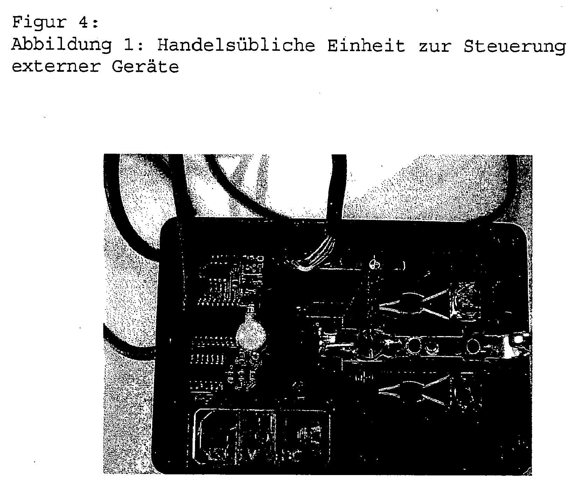

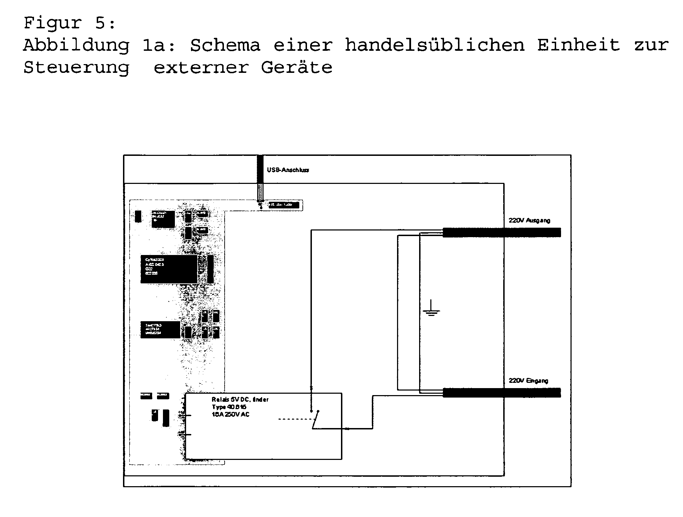

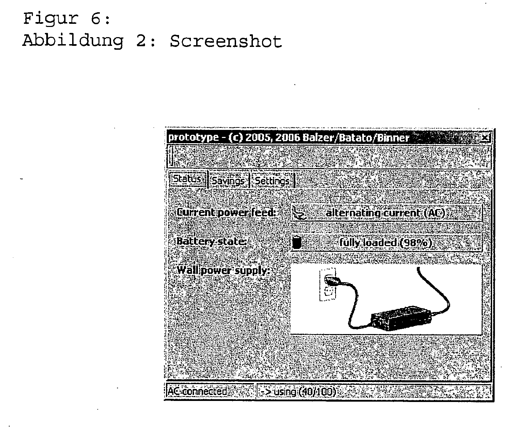

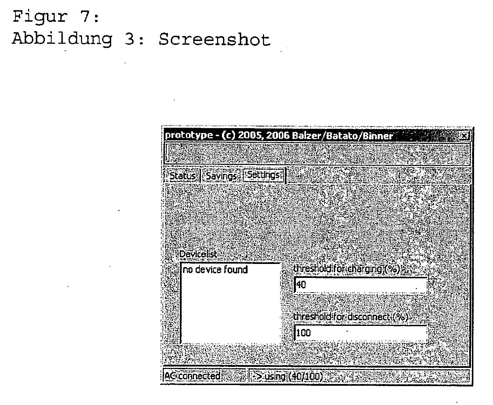

Figur 1 zeigt eine schematische Übersicht der erfindungsgemäßen Vorrichtung. Das erfindungsgemässe Zusammenwirken der Komponenten ist in Figur 2 dargestellt. Figur 3 zeigt die schematische Arbeitsweise der erfindungsgemäss eingesetzten Steuereinheit (3).

Hardware-Komponente:

Die Hardware enthält eine Steuereinheit (3), über die die Ladevorrichtung (2) mit dem Stromnetz verbunden ist. In ihr befindet sich ein Mikrochip, der sowohl dem Betriebssystem der computergesteuerten Vorrichtung (1) mitteilt, zu welcher Geräteklasse (HID) die Steuereinheit gehört, als auch Steuerbefehle an das in der Steuereinheit integrierte Schließrelais (6) weitergibt

Die Steuereinheit (3) hat einen USB-Anschluss, über den sie mit Strom versorgt wird und durch den sie Steuersignale sendet und empfängt. Es wird keine Energie zum Betrieb der Steuereinheit vom Stromnetz bezogen.

Der Mikrochip steuert das Schließrelais (6), welches den primären Stromkreislauf unterbricht und so die Ladevorrichtung (2) physikalisch von der Stromversorgung trennt.

Liegt kein Strom am Schließrelais an (z.B. die computergesteuerte Vorrichtung ist ausgeschaltet), ist der Stromkreislauf unterbrochen. Mittels einer stromführenden Datenverbindung (5) wird die Steuereinheit (3) mit einem USB-Anschluss der computergesteuerten Vorrichtung (1) verbunden. In einer weiteren Ausführungsform ist ein zusätzlicher Schalter an der Steuereinheit vorgesehen, welcher den manuellen Eingriff in den Schaltzustand zur Veränderung des Schließrelais (6) ermöglicht.

Software-Komponente:

Zur Kommunikation der computergesteuerten Vorrichtung (1) mit der Steuereinheit (3) sind zwei Aspekte zu berücksichtigen. Zum einen wird die Steuereinheit von dem Betriebssystem, z.B. Windows, als Human Interface Device (HID) erkannt, eine Geräteklasse für Universal Serial Bus (=USB) Geräte, unter die z.B. Tastaturen und Mäuse fallen. Da diese Geräte meist dieselben Fähigkeiten, Eigenschaften und Funktionen besitzen, werden diese zum Beispiel bei Windows-Systemen ab 2000 automatisch erkannt und deren Treiber installiert. Da USB den Betrieb von bis zu 127 Geräten an einem Computer unterstützt erhält jedes USB-Gerät vom Betriebssystem eine Identifikation zur Adressierung. Sobald die Treiber und damit die Steuereinheit installiert sind, kann das Gerät über die *application programming interface* (=API) angesprochen werden. Die API ist eine Schnittstelle, die von einem Betriebssystem oder von einem anderen Softwaresystem weiteren Programmen zur Verfügung gestellt wird. Wichtig hierbei ist, dass Systeme, die eine API zur Verfügung stellen, nur angeben müssen, wie einzelne Funktionen abgerufen werden - und nicht wie diese Funktionen an sich aufgebaut oder implementiert sind. Windows verfügt ebenfalls über eine API, die u. a. dafür sorgt, dass z.B. Knöpfe (so genannte buttons) und Fenster in Windows immer nahezu gleiches Aussehen und Aufbau haben. Dieselbe Windows - API ermöglicht auch das Ansprechen von Hardware, in vorliegenden Fall der Steuereinheit (3).

Die Software kommuniziert also über die API mit dem Mikrochip in der Steuereinheit. In einer Hochsprache gegebene Befehle werden durch die API an den Treiber weitergeleitet und letztlich als maschinenlesbarer Binärcode an den Mikrochip weitergeleitet. Die Software schaltet das Schließrelais bei Start der computergesteuerten Vorrichtung ein und ermittelt während des Betriebes den aktuellen Ladezustand des wiederaufladbaren Energiespeichers über die Betriebssystem API und kann das Schließrelais (6) in der Steuereinheit (3) je nach Bedarf ein- bzw. ausschalten. Dabei wird stets der aktuelle Status angezeigt, also ob das Relais ein- bzw. ausgeschaltet ist. Bei Betriebssystemen mit grafischer Oberfläche wird der Zustand des wiederaufladbaren Energiespeichers (1a) ebenfalls automatisch angezeigt. Hier werden also Hardware-Informationen über die Windows-API genutzt; auch Akkus sind als Hardware registriert und können deshalb ausgewertet werden.

Die Software entscheidet nun nach einem vorgegebenen Schema, d.h. nach frei wählbaren, einstellbaren Parametern, wann die Ladevorrichtung (2) vom Stromkreislauf getrennt und wann diese erneut angeschlossen wird.

Je nach eingestelltem Schema wird über die Software der Befehl erteilt, den wiederaufladbaren Energiespeicher (1a) beim Unterschreiten einer angegebenen Mindestkapazität (MK) für eine gewisse Zeit (durch Einschalten des Relais durch ein Signal der Software) wieder aufzuladen und den Ladevorgang bei Erreichen einer vordefinierten Energiespeicherkapazität, z.B. 80, 90, 99 oder 100%, zu beenden.

Als Beispiel kann eine Mindestkapazität von 20, 30 oder 40% eingegeben werden, um den so genannten "Memory-Effekt" zu verhindern. Auch eine Überladung des Energiespeichers wird ausgeschlossen.

Verschiedene Schemata können verschiedene Anwender-Szenarien abbilden, wie beispielsweise das maximale Ausnutzen der Akku-Kapazität (MK~20%), die maximale Energiespeicher-Lebensdauer (Mk~40%) oder höchste Mobilität (MK~50%).

Der Vorgang des Be- und Entladens wiederholt sich und somit wird die computergesteuerte Vorrichtung (1) wechselseitig vom Energiespeicher (1a) und Netzstrom versorgt. Diese Schemata können sowohl vom Benutzer ausgewählt, als auch selbst definiert oder verändert werden.

Beim Wechsel der erfindungsgemäßen computergesteuerten Vorrichtung (1) in den Standby-Modus wird die Ladevorrichtung (2) automatisch vom Stromnetz getrennt, weil dann das SchließRelais (6) der Steuereinheit (3) keinen USB-Strom mehr erhält. Dieser Fall tritt auch beim Herunterfahren des Betriebssystems ein. Hierdurch kann kein weiterer Strom die Ladevorrichtung oder die computergesteuerte Vorrichtung überhitzen.

Bei einem Ausfall der Software behält das Relais (6) seinen aktuellen Zustand bei, da zum Ein- bzw. Ausschalten ein Befehl an den Mikrochip abgegeben wird, welcher erst durch einen weiteren Befehl seine Gültigkeit verliert. So kann der aktuelle Arbeitsstand noch gespeichert werden ohne dass ein Datenverlust eintritt. Hier wirkt der Energiespeicher (Akku) wie eine unterbrechungsfreie Stromversorgung (=USV). Ein Neustart stellt dann den ursprünglichen Zustand der Software wieder her.

An dem folgenden Beispiel wird die energiesparende Wirkung, welche durch die erfindungsgemäße Vorrichtung und das erfindungsgemäße Verfahren erreichbar ist, verdeutlicht:

Modellrechnung / Messung Stromverbrauch während des Betriebs Bedingungen (am Beispiel Sony Vaio A115Z):

| 8 | Std/Tag |
|---|---|
| 30 | Tage/Monat |
| 12 | Monate/Jahr |

Preis kWh: 16,9 Cent/Kilowattstunde (Angaben der Stadtwerke München für Privatkunden - Stand 11/2005)

Stromverbrauch Notebook ohne Erfindung:

19,5V * 4,1A = 0,079kW x 8 Std. = 0,632 kWh pro Tag x 30 = 18,96 kWh pro Monat
Kosten für einen Monat Normalbetrieb: 3,06 €/Monat
Jährliche Kosten: 36,83 €/Jahr

Stromverbrauch Notebook mit Erfindung:

19,5V * 4,1A = 0,079kW x 3 Std = 0,237 kWh pro Tag x 30 = 4,11 kWh pro Monat
Kosten für einen Monat Normalbetrieb: 1,15 €/Monat
Jährliche Kosten: 13,80 €/Jahr

Jährliche Ersparnis: 22,03 €/Jahr oder 59,8% der Energiekosten.

### 1.4. Vorteile der Erfindung

Die beschriebene Erfindung bringt bei der Verwendung eines Notebooks somit folgende Vorteile:

A). Bei ausgeschaltetem Notebook

(i) ist das Netzteil physikalisch von der Stromversorgung getrennt und es wird kein Strom verbraucht;
(ii) werden Überspannungsschäden oder Überhitzung des Netzteils bzw. der Batterie ausgeschlossen;
(iii) wird ein Überladen der Batterie ausgeschlossen.

B). Bei eingeschaltetem Notebook, d.h. während des Betriebs des Notebooks

(i) wird zur Energieeinsparung das Netzteil nach Erreichen eines frei definierbaren Ladezustands physikalisch vom Stromnetz getrennt und bei Absinken auf einen ebenso frei definierbaren Ladezustand wieder verbunden. Dadurch kann ein Strom sparendes Energiemanagement betrieben werden ;
(ii) wird der Memory Effekte bei der Batterie gezielt minimiert, die Akku-Kapazität voll ausgenutzt oder die höchste Mobilität erreicht.

### 1.5. Bevorzugte Ausführungsformen der Erfindung

Bevorzugte Ausführungsformen der Erfindung sind für die Vorrichtung in den abhängigen Ansprüchen 2 bis 5 und für das Verfahren in den abhängigen Ansprüchen 7 bis 15 enthalten.

Es ist sehr vorteilhaft, ein Notebook oder einen Laptop Computer mit einem NiMH oder Nickel-Cadmium (NiCd) Akku zu verwenden, da mit diesen Energiespeichern die Leistungsfähigkeit der Batterie optimal erhalten wird. Selbstverständlich können auch andere wieder aufladbare Energiespeichertypen verwendet werden.

Als besonders vorteilhaft hat es sich herausgestellt, die stromführende Datenverbindung (5) in Form einer USB Verbindung auszuführen.

Im Falle eines Totalausfalls des Akkus (z.B. Tiefenentladung, Defekt) hat es sich es sich als besonders vorteilhaft herausgestellt, dass an der Steuereinheit (3) ein Schalter zur Überbrückung der Steuerung vorgesehen ist und somit die Verbindung zum Stromnetz manuell hergestellt werden kann.

Weiterhin ist besonders vorteilhaft, wenn die Steuereinheit (3) im Gehäuse der Ladevorrichtung (2), für den Nutzer nicht als extra Gerät ersichtlich, vorgesehen ist.

In der Massenverbreitung der erfindungsgemäßen Vorrichtung ist es weiterhin sehr vorteilhaft, wenn die Strom führende Datenleitung (5) in das Anschlusskabel der Ladevorrichtung (2) integriert ist.

Weiterhin ist als vorteilhaft anzusehen, wenn in der erfindungsgemäßen Vorrichtung (der Steuereinheit (3)) ein USB Hub (eine Art USB Mehrfachstecker) für den Anschluss von USB Geräten vorgesehen ist (Netzteil mit USB Hub).

Darüber hinaus ist es als besonders vorteilhaft anzusehen, wenn in der Softwaresteuerung verschieden Ladeschemen vorgesehen sind und dass die Ladeschemen vom Benutzter einfach abgerufen werden können (z.B. Arbeit im Büro, Arbeit auf Reisen, im Hotel etc.)

### *1.6. Ausführungsbeispiele*

Die beschriebene Erfindung kann zum Beispiel folgendermaßen ausgeführt werden:

### 1.6.1. Hardware

Zur Ausführung können die folgenden Hardwarekomponenten beispielhaft verwendet werden:

> a) Computergesteuerte Vorrichtungen (1)
> Es können z.B. alle handelsüblichen Notebook Computer verwendet werden (IBM Thinkpad X31, Toshiba Satelite Pro, Sony Vaio A115 Z u. a.), die ein Betriebsystem ab Windows Version 2000 installiert haben.
>
> b) Netzteile (2)
> Es können z.B. alle handelsüblichen mit den Notebook Computern ausgelieferten Netzteile verwendet werden (z.B. IBM Thinkpad X31 Netzteil, Toshiba Satelite Pro Netzteil, Sony Vaio A115 Z Netzteil).

> c) Steuereinheit (3)
> Es können z.B. alle handelsüblichen Einheiten zur Steuerung externer Geräte verwendet werden, die ein Relais beinhalten, das eine sichere Trennung nach VDE 0160 / EN 50178 und VDE 0700 / EN 60335 zwischen Spule und Kontaktsatz gewährleistet (z.B. USB Switch von Cleware GmbH, SwitchBox-USB von Antrax Datentechnik GmbH).
>
> (Abbildung1: Handelsübliche Einheit zur Steuerung externer Geräte)
>
> (Abbildung 1a: Schema einer handelsüblichen Einheit zur Steuerung externer Geräte)

### 1.6.2. Software

Zur Ausführung kann eine von den Erfindern entwickelte Software eingesetzt werden. Zur Überprüfung der Ausführbarkeit der Erfindung kann diese Software direkt unter
"http://www.dataproject.de/bbb/bbb_setup.zip" geladen werden.

Hierbei wird der gegenwärtige Ladezustand angezeigt (Abbildung 2).

> (Abbildung 2)

Abbildung 3: zeigt die Einstellmöglichkeiten des Standard-Schemas:

> (Abbildung 3)

### Quellcode der Schnittstelle für Prototyp

Im Folgenden ist die Schnittstelle dargestellt, mit der der Mikrochip angesprochen werden kann. Hierbei handelt es sich um die Hochsprache Borland Delphi Version 6.

```
interface
uses

    Windows;

const

    LEDs = 0;
    EEwrite = 1;
    EEread = 2;
    Reset = 3;
    KeepCalm = 4;
    GetInfo = 5;
    StartMeasuring = 6;

type

    BBBUSBactions = DWORD;
```

```
const

    OnlineTime = 1;
    OnlineCount = 2;
    ManualTime = 3;
    ManualCount = 4;

type

    BBBUSBInfoType = DWORD;

const

    LED_0 = 0;
    LED_1 = 1;
    LED_2 = 2;
    LED_3 = 3;

type

    BBBLED_IDs = DWORD;

const

    SWITCH_0 = $10;
    SWITCH_1 = $11;
    SWITCH_2 = $12;
    SWITCH_3 = $13;
    SWITCH_4 = $14;
    SWITCH_5 = $15;
    SWITCH_6 = $16;
    SWITCH_7 = $17;
    SWITCH_8 = $18;
    SWITCH_9 = $19;
    SWITCH_10 = $1A;
    SWITCH_11 = $1B;
    SWITCH_12 = $1C;
    SWITCH_13 = $1D;
    SWITCH_14 = $1E;
    SWITCH_15 = $1F;

type

    BBBSWITCH_IDs = DWORD;

const

    ILLEGAL_DEVICE = 0;
    LED_DEVICE = $01;
    WATCHDOG_DEVICE = $05;
    AUTORESET_DEVICE = $06;
    SWITCH1_DEVICE = $08;
    SWITCH2_DEVICE = $09;
    SWITCH3_DEVICE = $0A;
    SWITCH4_DEVICE = $0B;
    TEMPERATURE_DEVICE = $10;
    TEMPERATURE2_DEVICE = $11;
    TEMPERATURE5_DEVICE = $15;
    HUMIDITY1_DEVICE = $20;
    CONTACT00_DEVICE = $30;
    CONTACT01_DEVICE = $31;
    CONTACT02_DEVICE = $32;
    CONTACT03_DEVICE = $33;
    CONTACT04_DEVICE = $34;
    CONTACT05_DEVICE = $35;
    CONTACT06_DEVICE = $36;
    CONTACT07_DEVICE = $37;
    CONTACT08_DEVICE = $38;
    CONTACT09_DEVICE = $39;
    CONTACT10_DEVICE = $3A;
    CONTACT11_DEVICE = $3B;
    CONTACT12_DEVICE = $3C;
    CONTACT13_DEVICE = $3D;
    CONTACT14_DEVICE = $3E;
    CONTACT15_DEVICE = $3F;

type

    BBBUSBtype_enum = DWORD;

type

    CUSBaccess = Pointer;

function BBBStartDevice(Obj: CUSBaccess; deviceNo: Integer): Integer; stdcall;
function BBBInitObject: CUSBaccess; stdcall;
procedure BBBUnInitObject(Obj: CUSBaccess); stdcall;
function BBBResetDevice(Obj: CUSBaccess; deviceNo: Integer): Integer; stdcall;
function BBBOpenD(Obj: CUSBaccess): Integer; stdcall;
// returns number of found Devices
function BBBCloseD(Obj: CUSBaccess): Integer; stdcall; // close all devices
function BBBSetSwitch(Obj: CUSBaccess; deviceNo: Integer; Switch: BBBSWITCH_IDs; On_: Integer): Integer; stdcall; // On: 0=off, 1=on
function BBBGetSwitch(Obj: CUSBaccess; deviceNo: Integer; Switch: BBBSWITCH_IDs): Integer; stdcall; // On: 0=off, 1=on, -1=error
function BBBGetUSBType(Obj: CUSBaccess; deviceNo: Integer): Integer; stdcall;
```

**1.6.3. Anordnung**

Ein Beispiel für die Anordnung der Bauteile zeigt folgende Ausführung:

    Software-Download unter
    http://www.dataproject.de/bbb/bbb_setup.zip

Die Software muss auf der computergesteuerten Vorrichtung (1) installiert werden und wird bei jedem Start automatisch ausgeführt.

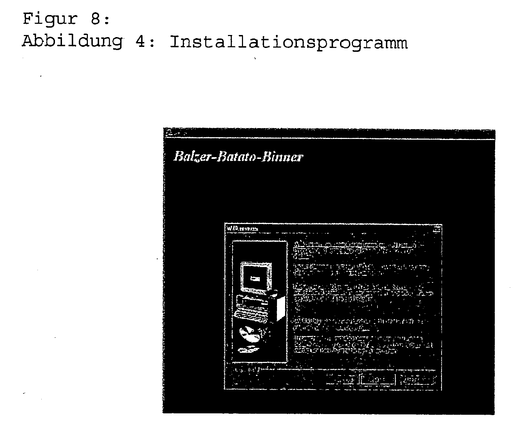

    (Abbildung 4: Installationsprogramm)

Die Steuereinheit (3) wird mit dem Stromnetz verbunden:

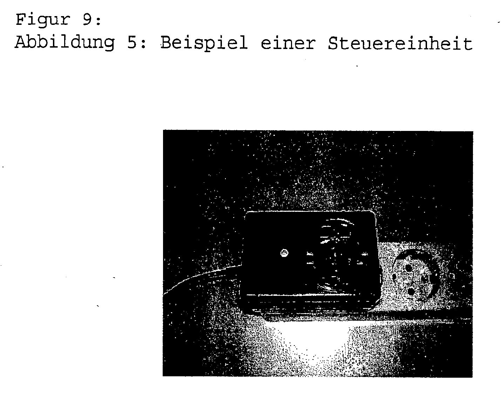

(Abbildung 5: Beispiel einer Steuereinheit)

Dann wird die Ladevorrichtung (2) durch die Leitung (4) mit der Steuereinheit (3) verbunden:

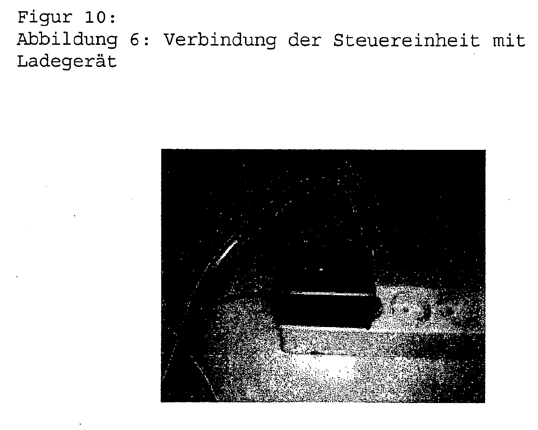

(Abbildung 6: Verbindung der Steuereinheit mit Ladegerät)

Die Ladevorrichtung (2) wird mit dem eigenen Verbindungskabel an die computergesteuerte Vorrichtung (1) angeschlossen.

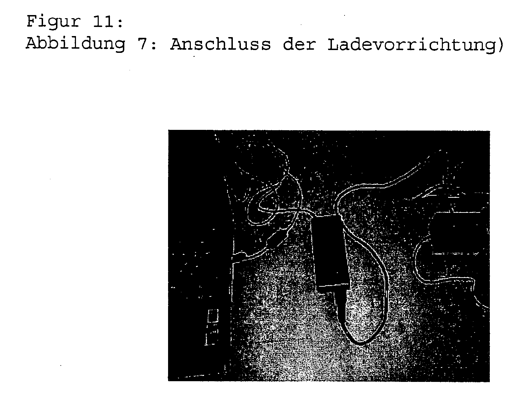

(Abbildung 7: Anschluss der Ladevorrichtung)

Weiterhin wird die Steuereinheit (3) über das Strom führende Datenkabel (5) mit der computergesteuerten Vorrichtung (1) verbunden.

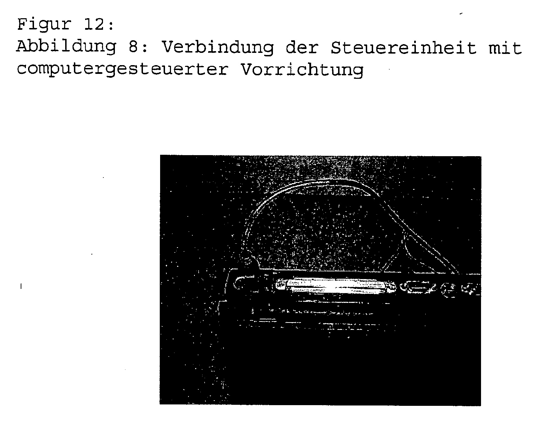

(Abbildung 8: Verbindung der Steuereinheit mit computergesteuerter Vorrichtung)

Hiermit ist eine funktionsfähige Anordnung gegeben.

**Patentansprüche**

1. Computergesteuerte Vorrichtung (1), z. B. ein tragbarer, batteriebetriebener Personal Computer (im folgenden mit dem englischen Begriff Notebook oder Laptop Computer beschrieben), mit einem darin enthaltenen, wieder aufladbaren Energiespeicher (1A) (Batterie, Akku) und einer damit elektrisch leitend verbundenen Ladevorrichtung (2), welche den Energiespeicher (1A) speist und über die Leitung (4) mit einer Steuereinheit (3), die an das Stromnetz angeschlossen ist, verbunden ist, **dadurch gekennzeichnet, dass** die Steuereinheit (3) über eine Strom führende Datenverbindung (5) mit der computergesteuerten Vorrichtung (1) verbunden ist und durch Signale der Vorrichtung (1) so steuerbar und beschaltbar ist, dass die Steuereinheit (3) (und die damit verbundene Ladevorrichtung (2)) entweder an das Stromnetz angeschlossen ist oder vollständig davon getrennt ist.

2. Computergesteuerte Vorrichtung nach Anspruch 1, **dadurch gekennzeichnet dass** die Strom führende Datenverbindung (5) aus einem USB Kabel besteht und an einen USB Port der Vorrichtung (1) angeschlossen ist.

3. Computergesteuerte Vorrichtung nach Anspruch 1 oder 2, **dadurch gekennzeichnet dass** die Steuereinheit (3) mit einer Relaisschaltung (6) versehen ist.

4. Computergesteuerte Vorrichtung nach einem der Ansprüche 1 bis 3, **dadurch gekennzeichnet dass** die Steuereinheit (3) mit einem EEPROM für HID-Erkennung versehen ist.

5. Computergesteuerte Vorrichtung nach einem der Ansprüche 1 bis 4, **dadurch gekennzeichnet dass** die Steuereinheit (3) zusätzlich einen elektrischen Ein/Aus Schalter enthält.

6. Verfahren zum Betreiben einer computergesteuerten Vorrichtung (1), z. B. eines tragbaren, batteriebetriebenen Personal Computers (im folgenden mit dem englischen Begriff Notebook oder Laptop Computer beschrieben), mit einem darin enthaltenen, wieder aufladbaren Energiespeicher (1A) (Batterie, Akku) und einer daran angeschlossenen Ladevorrichtung (2), welche den Energiespeicher (1A) speist und die über die Leitung (4) mit einer Steuereinheit (3), die an das Stromnetz angeschlossen ist, verbunden ist, mit der Maßgabe, dass die Steuereinheit (3) über eine Strom führende Datenverbindung (5) mit der computergesteuerten Vorrichtung (1) verbunden ist und durch Software gesteuerte Signale von der Vorrichtung (1) so gesteuert und beschaltet wird, dass die Steuereinheit (3) (und die damit verbundene Ladevorrichtung (2)) entweder an das Stromnetz angeschlossen ist bzw. davon vollständig getrennt ist.

7. Verfahren nach Anspruch 6, **dadurch gekennzeichnet, dass** beim Ab- bzw. Ausschalten der Vorrichtung (1) über ein Signal die Steuereinheit (3) vom Stromnetz vollständig getrennt wird.

8. Verfahren nach Anspruch 6 oder 7, **dadurch gekennzeichnet, dass** das Signal der Vorrichtung (1) durch den Ladezustand des Energiespeichers bestimmt wird.

9. Verfahren nach einem der Ansprüche 6 bis 8, **dadurch gekennzeichnet, dass** bei dem Ladezustand "voll" des Energiespeichers über ein Signal die Steuereinheit (3) vom Stromnetz vollständig getrennt wird.

10. Verfahren nach einem der Ansprüche 6 bis 9, **dadurch gekennzeichnet, dass**, wenn der Ladezustand des Energiespeichers einen Mindestwert, z.B. 40% der Kapazität, unterschreitet, über ein Signal die Steuereinheit (3) an das Stromnetz angeschaltet wird.

11. Verfahren nach einem der Ansprüche 6 bis 10, **dadurch gekennzeichnet, dass** ein Versorgungsstrom von der Vorrichtung (1) zur Steuereinheit (3) fließt und diese auch dann mit Strom versorgt, wenn die Steuereinheit (3) vollständig vom Stromnetz getrennt ist.

**12.** Verfahren nach einem der Ansprüche 6 bis 11, **dadurch gekennzeichnet, dass** als Strom führende Datenverbindung (5) ein USB Kabel verwendet wird.

**13.** Verfahren nach einem der Ansprüche 6 bis 12, **dadurch gekennzeichnet, dass** durch eine Benutzeroberfläche in der Vorrichtung (1) bestimmte Energieschemen eingestellt werden können.

**14.** Verfahren nach einem der Ansprüche 6 bis 13, **dadurch gekennzeichnet, dass** die computergesteuerte Vorrichtung (1) über ein application programming interface (API) einen Befehl an den Treiber der Steuereinheit (3) richtet, welcher den Befehl in den Maschinencode umwandelt, den die Steuereinheit (3) ausführt

**15.** Verfahren nach einem der Ansprüche 6 bis 14, **dadurch gekennzeichnet, dass** ein in der Steuereinheit (3) enthaltener Mikrochip über ein application progamming interface (API) der Vorrichtung (1) angesprochen wird, wodurch das Schließrelais (6) der Steuereinheit (3) eingeschaltet oder ausgeschaltet wird.

**Geänderte Patentansprüche gemäss Regel 86(2) EPÜ.**

**1.** Computergesteuerte Vorrichtung (1), z. B. ein tragbarer, batteriebetriebener Personal Computer, Notebook-PC oder Laptop-PC mit einem darin enthaltenen, wieder aufladbaren Energiespeicher (1A) (Batterie, Akku) und einer damit elektrisch leitend verbundenen Ladevorrichtung (2), welche den Energiespeicher (1A) speist und über die Leitung (4) mit einer Steuereinheit (3), die an das Stromnetz angeschlossen ist, verbunden ist, **dadurch gekennzeichnet, dass** über eine Benutzeroberfläche in der Vorrichtung (1) bestimmte Energieschemen einstellbar sind und die Steuereinheit (3) über eine Strom führende Datenverbindung (5) mit der computergesteuerten Vorrichtung (1) verbunden ist und durch Signale der Vorrichtung (1) so steuerbar und beschaltbar ist, dass die verbundene Ladevorrichtung (2) entweder an das Stromnetz angeschlossen ist oder vollständig davon getrennt ist.

**2.** Computergesteuerte Vorrichtung nach Anspruch 1, **dadurch gekennzeichnet dass** die Strom führende Datenverbindung (5) aus einem USB Kabel besteht und an einen USB Port der Vorrichtung (1) angeschlossen ist.

**3.** Computergesteuerte Vorrichtung nach Anspruch 1 oder 2, **dadurch gekennzeichnet dass** die Steuereinheit (3) mit einer Relaisschaltung (6) versehen ist.

**4.** Computergesteuerte Vorrichtung nach einem der Ansprüche 1 bis 3, **dadurch gekennzeichnet dass** die Steuereinheit (3) mit einem EEPROM für HID-Erkennung versehen ist.

**5.** Computergesteuerte Vorrichtung nach einem der Ansprüche 1 bis 4, **dadurch gekennzeichnet dass** die Steuereinheit (3) zusätzlich einen elektrischen Ein/Aus Schalter enthält.

**6.** Verfahren zum Betreiben einer computergesteuerten Vorrichtung (1), z. B. eines tragbaren, batteriebetriebenen Personal Computers, wie Laptop-PCs oder Notebook-PCs, mit einem darin enthaltenen, wieder aufladbaren Energiespeicher (1A) (Batterie, Akku) und einer daran angeschlossenen Ladevorrichtung (2), welche den Energiespeicher (1A) speist und die über die Leitung (4) mit einer Steuereinheit (3), die an das Stromnetz angeschlossen ist, verbunden ist, **mit der Maßgabe, dass** durch eine Benutzeroberfläche in der Vorrichtung (1) bestimmte Energieschemen eingestellt werden und die Steuereinheit (3) über eine Strom führende Datenverbindung (5) mit der computergesteuerten Vorrichtung (1) verbunden ist und durch Software gesteuerte Signale von der Vorrichtung (1) so gesteuert und beschaltet wird, dass die Ladevorrichtung (2) entweder an das Stromnetz angeschlossen ist bzw. davon vollständig getrennt ist.

**7.** Verfahren nach Anspruch 6, **dadurch gekennzeichnet, dass** beim Ab- bzw. Ausschalten der Vorrichtung (1) über ein Signal die Ladevorrichtung (2) vom Stromnetz vollständig getrennt wird.

**8.** Verfahren nach Anspruch 6 oder 7, **dadurch gekennzeichnet, dass** das Signal der Vorrichtung (1) durch den Ladezustand des Energiespeichers bestimmt wird.

**9.** Verfahren nach einem der Ansprüche 6 bis 8, **dadurch gekennzeichnet, dass** bei dem Ladezustand "voll" des Energiespeichers über ein Signal die Ladevorrichtung (2) vom Stromnetz vollständig getrennt wird.

**10.** Verfahren nach einem der Ansprüche 6 bis 9, **dadurch gekennzeichnet, dass**, wenn der Ladezustand des Energiespeichers einen Mindestwert, z.B. 40% der Kapazität, unterschreitet, über ein Signal die Ladevorrichtung (2) an das Stromnetz angeschaltet wird.

**11.** Verfahren nach einem der Ansprüche 6 bis 10, **dadurch gekennzeichnet, dass** ein Versorgungsstrom von der Vorrichtung (1) zur Steuereinheit (3) fließt und diese auch dann mit Strom versorgt, wenn die Ladevorrichtung (2) vollständig vom Stromnetz getrennt ist.

**12.** Verfahren nach einem der Ansprüche 6 bis 11, **dadurch gekennzeichnet, dass** als Strom führende Datenverbindung (5) ein USB Kabel verwendet wird.

Figur 1: Schematische Übersicht

# Figur 2: Zusammenspiel der Komponenten (1) bis (6)

**Ereignis: Software meldet dass der Batteriespeicher voll geladen ist:**

computergesteuerte
Vorrichtung sendet
Signal an die API:

Software

API

Ladevorrichtung

API gibt den Befehl an die
Treiber der Steuereinheit

Durch das Öffnen des Relais
wird der Stromkreislauf zur
Ladevorrichtung unterbrochen

Die Treiber wandeln den empfangenen Befehl
in Maschinencode um, den die Steuereinheit ausführt

Steuereinheit
öffnet Relais

Stromnetz

**Ereignis: Software meldet dass der Batteriespeicher die Mindestkapazität erreicht hat:**

computergesteuerte
Vorrichtung sendet
Signal an die API:

Software

API

Lade
vorrichtung

API gibt den Befehl an die
Treiber der Steuereinheit

Durch das Schliessen des Relais
wird der Stromkreislauf zur
Ladevorrichtung wiederhergestellt

Die Treiber wandeln den empfangenen Befehl
in Maschinencode um, den die Steuereinheit ausführt

Steuereinheit
schliedt Relais

Stromnetz

Figur 3: Schematische Arbeitsweise von Bauteil (3)
Steuereinheit

USB-Anschluss

220V Ausgang

220V Eingang

Platine mit integrierten
Schaltkreisen und
EEprom zur Steuerung
des Relais

Relais 5V DC
16A 250V AC

Figur 4:
Abbildung 1: Handelsübliche Einheit zur Steuerung
externer Geräte

Figur 5:
Abbildung 1a: Schema einer handelsüblichen Einheit zur
Steuerung   externer Geräte

Figur 6:
Abbildung 2: Screenshot

Figur 7:
Abbildung 3: Screenshot

Figur 8:
Abbildung 4: Installationsprogramm

Figur 9:
Abbildung 5: Beispiel einer Steuereinheit

Figur 10:
Abbildung 6: Verbindung der Steuereinheit mit
Ladegerät

Figur 11:
Abbildung 7: Anschluss der Ladevorrichtung)

Figur 12:
Abbildung 8: Verbindung der Steuereinheit mit
computergesteuerter Vorrichtung

**Europäisches Patentamt**

# EUROPÄISCHER RECHERCHENBERICHT

Nummer der Anmeldung

EP 06 00 4817

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | US 2002/023235 A1 (ODAOHHARA SHIGEFUMI)<br>21. Februar 2002 (2002-02-21)<br>* Absatz [0001] - Absatz [0022] *<br>* Absatz [0031] - Absatz [0059];<br>Abbildungen *<br>----- | 1-12,14,<br>15<br>13 | INV.<br>G06F1/26<br>G06F1/32 |
| A | US 6 509 655 B1 (WANG PEACE)<br>21. Januar 2003 (2003-01-21)<br>* Spalte 1, Zeile 6 - Zeile 28 *<br>* Spalte 1, Zeile 64 - Spalte 2, Zeile 41<br>*<br>* Spalte 3, Zeile 5 - Zeile 6; Abbildungen<br>2-4 *<br>----- | 1-3,6,12 | |
| Y | US 2004/066171 A1 (MORI IICHIRO)<br>8. April 2004 (2004-04-08)<br>* Absatz [0001] *<br>* Absatz [0010] - Absatz [0024] *<br>* Absatz [0078] - Absatz [0112];<br>Abbildungen 1-3 *<br>----- | 13 | |
| A | US 2004/001346 A1 (MCDOWELL CHANDLER TODD<br>ET AL) 1. Januar 2004 (2004-01-01)<br>* Absatz [0002] - Absatz [0009] *<br>* Absatz [0016] - Absatz [0040];<br>Abbildungen *<br>----- | 1,3,6,7,<br>9 | RECHERCHIERTE<br>SACHGEBIETE (IPC)<br>G06F |

Der vorliegende Recherchenbericht wurde für alle Patentansprüche erstellt

| Recherchenort | Abschlußdatum der Recherche | Prüfer |
|---|---|---|
| München | 29. September 2006 | Semple, Mark |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
.................................................................................
& : Mitglied der gleichen Patentfamilie, übereinstimmendes
   Dokument

**ANHANG ZUM EUROPÄISCHEN RECHERCHENBERICHT
ÜBER DIE EUROPÄISCHE PATENTANMELDUNG NR.**

EP 06 00 4817

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-09-2006

| Im Recherchenbericht angeführtes Patentdokument | Datum der Veröffentlichung | Mitglied(er) der Patentfamilie | Datum der Veröffentlichung |
|---|---|---|---|
| US 2002023235 A1 | 21-02-2002 | JP 2002062952 A | 28-02-2002 |
| US 6509655 B1 | 21-01-2003 | KEINE | |
| US 2004066171 A1 | 08-04-2004 | CN 1494192 A<br>JP 2004094607 A | 05-05-2004<br>25-03-2004 |
| US 2004001346 A1 | 01-01-2004 | KEINE | |

Für nähere Einzelheiten zu diesem Anhang : siehe Amtsblatt des Europäischen Patentamts, Nr.12/82

**EP 1 832 954 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 220230